# EUROPÄISCHE PATENTSCHRIFT

(11) **EP 2 966 576 B1**
(45) Veröffentlichungstag und Bekanntmachung des Hinweises auf die Patenterteilung: **01.03.2017**
(21) Anmeldenummer: 15175263.1
(22) Anmeldetag: 03.07.2015
(51) Int. Cl.: G06F 15/16, G06F 9/50, H04Q 9/00

(54) **UMFELDERFASSUNGSSYSTEM UND VERFAHREN ZUM BETRIEB EINES UMFELDERFASSUNGSSYSTEMS**
SYSTEM FOR MONITORING SURROUNDINGS AND METHOD FOR OPERATING A SYSTEM FOR MONITORING SURROUNDINGS
SYSTÈME DE DÉTECTION D'ENVIRONNEMENT ET PROCÉDÉ DE FONCTIONNEMENT D'UN SYSTÈME DE DÉTECTION D'ENVIRONNEMENT

(30) Priorität: 08.07.2014 DE 102014213205
(43) Veröffentlichungstag der Anmeldung: 13.01.2016
(73) Patentinhaber: ROBERT BOSCH GMBH, 70442 Stuttgart (DE)
(72) Erfinder: Schmid, Dirk, 75397 Simmozheim (DE); Stuehmer, Stephan, 71277 Rutesheim (DE); Schumann, Michael, 70597 Stuttgart (DE)

(56) Entgegenhaltungen:
- WO-A1-2014/067978
- US-A- 5 544 054
- US-A1- 2014 115 372

## Beschreibung

### Stand der Technik

Die Erfindung betrifft ein Verfahren zum Betrieb eines Umfelderfassungssystems für ein Fahrzeug, wobei das Umfelderfassungssystem mindestens ein Steuergerät und mindestens zwei Sensoren umfasst und die Sensoren eingerichtet sind, Sensordaten zu erfassen, auszuwerten und die Ergebnisse an das Steuergerät zu senden. Des Weiteren betrifft die Erfindung ein Umfelderfassungssystem, welches eingerichtet ist, das Verfahren auszuführen, ein Computerprogramm, welches das Verfahren ausführt, sowie ein Fahrzeug mit einem Umfelderfassungssystem.

In modernen Fahrzeugen werden verschiedene Fahrassistenzsysteme eingesetzt, die mit Hilfe von Daten der Umgebung des Fahrzeugs den Fahrer bei der Durchführung verschiedener Fahrmanöver unterstützen. Diese Fahrassistenzsysteme umfassen beispielsweise Einparksysteme, welche selbstständig Parklücken erkennen und das Fahrzeug in die Parklücke führen können. Ein weiteres Beispiel sind Rückfahrassistenten, die den Fahrweg während des Rückwärtsfahrens auf Hindernisse überprüfen. Zur Erfüllung ihrer Aufgaben benötigen die genannten Fahrassistenzsysteme ein möglichst präzises Abbild der Umgebung des Fahrzeugs. Hierfür umfasst das Fahrzeug ein Umfelderfassungssystem, welches ein solches Abbild der Umgebung mit verschiedenen Sensoren erzeugt. Beispielsweise werden hierfür Ultraschallsensoren, Radarsensoren, Lidarsensoren oder Kamerasysteme eingesetzt. Je nach Art des Sensors wird beispielsweise von einem Sender ein Signal ausgesendet, dessen Echo bei Reflexion an einem Hindernis von einem Empfänger am Fahrzeug registriert wird. Aus der Zeit, die zwischen Aussenden und Empfangen des Signals vergangen ist, und der bekannten Ausbreitungsgeschwindigkeit des Signals kann dann der. Abstand zwischen dem Fahrzeug und dem reflektierenden Hindernis berechnet werden. Bei Sensoren, die die Umgebung über eine Kamera überwachen, erkennen Bildverarbeitungsalgorithmen die Position, Größe, Entfernung und weitere Daten von Objekten in der Umgebung des Fahrzeugs.

Allen Sensoren gemeinsam ist, dass diese in einem ersten Schritt Sensordaten, erfassen, die in einem nachfolgenden Schritt ausgewertet werden, um das Abbild der Umgebung zu erzeugen. Die Auswertung dieser Sensordaten, um aus diesen Nutzinformation zu extrahieren, ist eine sehr komplexe Rechenaufgabe. Daher ist es erforderlich, dem Umfelderfassungssystem ausreichend Rechenleistung zuzuordnen.

Aus DE 10 2007 060 649 A1 ist ein Kraftfahrzeug bekannt, das mehrere Steuergeräte aufweist. Dabei ist die Rechenleistung der einzelnen Steuergeräte so dimensioniert, dass diese dem Spitzenbedarf der dem Steuergerät zugeordneten Funktion entspricht. Freie Kapazitäten der Rechenleistung, wie sie beispielsweise während Wartezeiten auftreten, stellen die Steuergeräte im Kraftfahrzeug zur Verfügung, so dass Rechenaufgaben auf andere Steuergeräte verteilt werden können. Die Steuergeräte sind dazu hardwaretechnisch identisch ausgeführt und verwenden gegebenenfalls das gleiche bzw. ein kompatibles Betriebssystem.

Aus US 2014/115372 ist ein System zur dynamischen Verteilung von Daten zwischen Sensoren und Steuergeräten bekannt. Die Sensoren des Systems können Daten, wie beispielsweise Videodaten erfassen und diese zudem durch enthaltene Rechenvorrichtungen verarbeiten. Die Daten können auch durch das Steuergerät verarbeitet werden. Basierend auf Faktoren, wie beispielsweise dem Stromverbrauch der Sensoren und der Rechenvorrichtung wird die Verarbeitung der Daten dynamisch verteilt.

WO 2014/067978 beschreibt ein zu verwaltendes Steuergerätenetzwerk, welches Rechner enthält, denen abhängig von einem Bedarf der Fahrzeuganwendungen und abhängig von einer Auslastung der jeweiligen Rechner Fahrzeuganwendungen dynamisch zugeteilt werden. Die Fahrzeuganwendung, welche Rechenressourcen benötigt, kann beispielsweise eine ESP-Anwendung darstellen. Des Weiteren können auch Sensoren, Aktuatoren und externe Rechner vorliegen, welche über eine externe Schnittstelle mit dem Steuergerätenetzwerk kommunizieren können und wobei die Fahrzeuganwendungen auch auf den externen Rechnern bearbeitet werden können.

### Offenbarung der Erfindung

Es wird ein Verfahren zum Betrieb eines Umfelderfassungssystems für ein Fahrzeug vorgeschlagen, wobei das Umfelderfassungssystem mindestens ein Steuergerät und mindestens zwei Sensoren umfasst und wobei die Sensoren eingerichtet sind, Sensordaten zu erfassen, auszuwerten und die Ergebnisse an das Steuergerät zu senden, wobei jeder Sensor sowie das Steuergerät jeweils eine Rechenvorrichtung zur Bearbeitung von Rechenaufgaben umfassen, wobei Rechenaufgaben zuerst auf Rechenvorrichtungen von Sensoren verteilt werden, die freie Ressourcen aufweisen, und anschließend die noch nicht verteilten Rechenaufgaben an das Steuergerät verteilt werden.

Das Umfelderfassungssystem ist hierbei eingerichtet, Informationen, die das Umfeld des Fahrzeugs beschreiben, zu erfassen. Das Fahrzeug ist beispielsweise ein Kraftfahrzeug bzw. Automobil, welches in der Regel mit einem Verbrennungsmotor und/oder Elektromotor angetrieben wird. Die vom Umfelderfassungssystem gelieferten Informationen über die Umgebung des Fahrzeugs umfassen beispielsweise die Position, den Abstand und/oder die Art von Objekten im Umfeld des Fahrzeugs. Diese Informationen können beispielsweise zur Verwendung in einem Fahrassistenzsystem des Fahrzeugs vorgesehen sein.

Das Umfelderfassungssystem umfasst mindestens zwei Sensoren, die eingerichtet sind, Sensordaten zu erfassen und auszuwerten. Dabei sind die Sensordaten die vom jeweiligen Sensor gelieferten Rohdaten. Durch die Auswertung werden aus den Sensordaten Informationen über das Umfeld des Fahrzeugs gewonnen. Beispielsweise werden in den Sensordaten Objekte identifiziert und mit verschiedenen Parametern beschrieben. Diese Parameter können insbesondere den Abstand dieses Objekts zum Fahrzeug, dessen relative Position zum Fahrzeug und dessen Größe umfassen. Diese aus den Sensordaten extrahierten Informationen stellen das Auswertungsergebnis der Sensordaten dar und diese Ergebnisse werden von den Sensoren an das Steuergerät gesendet. Das Steuergerät wiederum fasst die Ergebnisse aller Sensoren des Umfelderfassungssystems zusammen und kann daraus ein Abbild über das Umfeld des Fahrzeugs gewinnen. Dieses Abbild wiederum kann das Steuergerät den verschiedenen Fahrassistenzsystemen des Fahrzeugs zur Verfügung stellen. Beispiele für solche Fahrassistenzsysteme sind Einparkassistenten, Rückwärtsfahrassistenten (u. a. *Back Over Avoidance Systems*), Totwinkelassistenzsysteme (*Blind Spot Detection Systems*) und Seitensichtsystems (*Side View Assistance*).

Das Auswerten der Sensordaten stellt eine Rechenaufgabe dar, die von einer Rechenvorrichtung bearbeitet wird. Bei dem vorgeschlagenen Verfahren umfasst jeder Sensor sowie das bzw. jedes Steuergerät eine Rechenvorrichtung, die zur Bearbeitung von Rechenaufgaben eingerichtet ist. Die Rechenvorrichtung bearbeitet in der Regel bevorzugt Rechenaufgaben zur Auswertung derjenigen Sensordaten des Sensors, dem die Rechenvorrichtung zugeordnet ist. Reicht die Kapazität der Rechenvorrichtung nicht aus, werden Rechenaufgaben auf weitere Rechenvorrichtungen verteilt.

In einer typischen Fahrsituation, wie beispielsweise dem Einparken in eine Parklücke, dem Fahren in einer Baustelle oder dem Rückwärtsfahren, werden nicht sämtliche Sensoren des Fahrzeugs benötigt, um ein für die jeweilige Fahrsituation adäquates Abbild des Umfeldes zu erzeugen. Beispielsweise werden bei einer Rückwärtsfahrt nur Informationen benötigt, die von Sensoren geliefert werden, die am Fahrzeug so angeordnet sind, dass diese nach hinten blicken. Sensoren, die beispielweise an der Front des Fahrzeugs angeordnet sind, werden für eine Überwachung einer Rückwärtsfahrt nicht benötigt, so dass in diesem Beispiel die in der Front des Fahrzeugs angeordneten Sensoren keine Sensordaten erfassen.

Dabei tritt das Problem auf, dass die Rechenvorrichtungen, die einem Sensor zugeordnet sind, der gerade aktiv ist, voll ausgelastet sind, während die Rechenvorrichtungen der anderen Sensoren freie Ressourcen aufweisen.

Um alle Rechenvorrichtungen möglichst gleichmäßig auszulasten, ist im Verfahren vorgesehen, dass Rechenaufgaben zuerst auf Rechenvorrichtungen von Sensoren verteilt werden, die momentan keine Sensordaten erfassen. Rechenaufgaben, die nicht auf Rechenvorrichtungen von Sensoren verteilt werden konnten, werden anschließend an das oder die Steuergeräte verteilt. Dadurch wird erreicht, dass die bei der Umfelderfassung auftretenden Rechenaufgaben möglichst gleichmäßig auf die im Umfelderfassungssystem angeordneten Rechenvorrichtungen verteilt werden.

Bei den Rechenaufgaben handelt es sich bevorzugt um Rechenaufgaben, die der Auswertung von Sensordaten dienen. In weiteren Ausführungsformen des Verfahrens wäre es jedoch auch denkbar, andere Rechenaufgaben, die beim Betrieb des Fahrzeugs anfallen, ebenfalls auf die Rechenvorrichtungen des Umfelderfassungssystems aufzuteilen.

Das Umfelderfassungssystem kann prinzipiell jeden Sensortyp verwenden, der geeignet ist, Informationen über das Umfeld des Fahrzeugs zu gewinnen. Insbesondere werden Sensoren bevorzugt, die als Ultraschallsensoren, Radarsensoren, Lidarsensoren oder als optische Kameras ausgeführt sind.

Bei Sensoren, die auf Ultraschall, Radar oder Lidar basieren, wird ein Sendesignal ausgesendet und anschließend ein von einem Objekt in der Umgebung des Fahrzeugs reflektiertes Signalecho wieder empfangen. Dabei kann aus der Zeitdauer, die seit dem Aussenden und Empfangen des Signals verstrichen ist, und der bekannten Ausbreitungsgeschwindigkeit des Signals auf die Entfernung des Objekts vom Fahrzeug geschlossen werden. Dazu ist es erforderlich, in dem empfangenen Signal das Echo zu detektieren. Des Weiteren ist es üblich, diese echobasierenden Verfahren auf Arrays von Sendern und Empfängern anzuwenden. Dabei wird ein Signal von mehreren Sendern gleichzeitig ausgesandt, wobei sich dadurch die Ausbreitungseigenschaften des Signals gezielt beeinflussen lassen. Insbesondere kann dadurch die Ausbreitungsrichtung beeinflusst werden. Ebenso ist üblich, nicht nur eine einzige Empfangseinheit sondern ein ganzes Array von Empfangseinheiten zu verwenden, um aus den empfangenen Signalen weitere Informationen zu gewinnen, wie beispielsweise die Richtung, aus der das Echo empfangen wurde. Derartige Auswertungen der Sensordaten erfordern einen hohen Rechenaufwand, so dass zur Bearbeitung der entsprechenden Rechenaufgaben leistungsfähige Rechenvorrichtungen notwendig sind.

Die Rechenvorrichtungen sind dabei so ausgeführt, dass diese ihnen zugeteilte Rechenaufgaben nacheinander abarbeiten, wobei bei der Festlegung der Reihenfolge Rechenaufgaben mit einer hohen Priorität bevorzugt behandelt werden. In diesem Zusammenhang meint der Ausdruck "freie Ressourcen" einer Rechenvorrichtung, dass zurzeit keine Rechenaufgabe bearbeitet wird oder dass lediglich Rechenaufgaben mit einer niedrigen Priorität abgearbeitet werden.

Sind die Sensoren als bildgebende Sensoren ausgeführt, beispielsweise als normale optische Kamera oder als Infrarot-Kamera, dann sind zur Gewinnung der Informationen über das Umfeld Analysen der Bilder erforderlich. Dabei kommen verschiedene Algorithmen zum Einsatz, die in den Bildern Objekte identifizieren, sowie Informationen wie beispielsweise die Größe, Ausrichtung, Entfernung und Position der Objekte extrahieren. Auch die Anwendung solcher Bildauswerter-Algorithmen stellen Rechenaufgaben hoher Komplexität dar.

Je nach Ausführungsform des Verfahrens liegen die Rechenaufgaben in Form von kompiliertem Programmcode, unkompiliertem Programmcode, Bytecode, Sensordaten, Parametern, Befehlskommandos oder einer Kombination mindestens zweier dieser Möglichkeiten vor.

So ist es beispielsweise denkbar, dass auf den Rechenvorrichtungen ein Computerprogramm gespeichert ist, welches zur Auswertung von Sensordaten eingerichtet ist. In diesem Fall kann eine Rechenaufgabe in Form von Sensordaten eines Sensors eingegeben werden, wobei gegebenenfalls zusätzlich zu den Sensordaten noch Parameter und/oder Befehlskommandos mit übergeben werden.

Es ist aber auch denkbar, dass die Rechenvorrichtungen frei programmierbar ausgeführt sind und die Rechenaufgabe in Form eines Programms mit den dazugehörigen Sensordaten und gegebenenfalls Parametern eingegeben wird. Das Programm kann je nach Ausführungsvariante als kompilierter Programmcode, unkompilierter Programmcode oder Bytecode vorliegen.

Bei kompiliertem Programmcode handelt es sich um einen in einer Hochsprache wie beispielsweise C, C++, Pascal usw. geschriebenen Programmcode, der durch einen sogenannten Compiler in Maschinencode, der durch die Rechenvorrichtung ausführbar ist, übersetzt worden ist. Bei umkompiliertem Programmcode, auch Quellcode genannt, wird das Programm noch in der ursprünglichen, vom Entwickler geschriebenen, Form als Quellcode an die Rechenvorrichtung übergeben und erst dort mit Hilfe eines Compilers in ausführbaren Maschinencode umgesetzt.
Weiterhin ist es möglich, dass der auszuführende Quellcode erst zur Laufzeit generiert wird, d.h. während des Betriebs von einem anderen Computerprogramm erzeugt wird.

Einen Spezialfall stellt der Bytecode dar. Dieser wird ebenfalls von einem Compiler aus einen in einer Hochsprache vorliegenden Programmcode, wie beispielsweise Java, erzeugt, kann jedoch nicht direkt von einer Rechenvorrichtung ausgeführt werden. In diesem Fall umfasst die Rechenvorrichtung einen Interpreter oder einen weiteren Compiler, der den Bytecode auf der Rechenvorrichtung ausführt. Dies hat den Vorteil, dass der Bytecode nicht an bestimmte Hardware-technische Ausführungen einer Rechenvorrichtung angepasst werden muss, sondern vielmehr unabhängig von der genauen Ausgestaltung der Rechenvorrichtung selbst ist. Bei kompiliertem Programmcode hingegen ist dieser auf eine spezielle Ausführungsform einer Rechenvorrichtung abgestimmt und kann nicht ohne weiteres von einer anders ausgestalteten Rechenvorrichtung ausgeführt werden.

Dementsprechend ist es vorteilhaft, Bytecode oder unkompilierten Programmcode für die Ausgestaltung der Rechenaufgaben vorzusehen, wenn in dem Umfelderfassungssystem Rechenvorrichtungen mit unterschiedlicher Hardwareausgestaltung eingesetzt werden. Sind hingegen alle Rechenvorrichtungen identisch oder zumindest insoweit kompatibel ausgeführt, dass diese den gleichen Maschinencode ausführen können, so kann kompilierter Programmcode eingesetzt werden. In diesem Fall kann vorteilhaft der sonst notwendige Übersetzungsschritt vom unkompiliertem Programmcode bzw. Bytecode in den Maschinencode eingespart werden.

Je nach Komplexität der Auswertung der Sensordaten kann vorgesehen sein, dass eine Rechenaufgabe die vollständige Auswertung eines Sensordatensatzes umfasst, oder die Auswertung eines Sensordatensatzes kann in mehrere Rechenaufgaben aufgeteilt werden. Dabei wird unter dem Begriff Sensordatensatz eine Menge an Sensordaten eines Sensors verstanden, die im Rahmen einer Auswertung gemeinsam betrachtet werden. Im Fall von bildgebenden Sensoren wie normaloptische oder Infrarotkameras kann ein Sensordatensatz beispielsweise ein Kamerabild sein, im Fall von Ultraschall, Radar oder Lidar-basierenden Sensoren umfasst ein Sensordatensatz beispielsweise die zu einem Sendeimpuls empfangenen Signalechos. Dabei ist es denkbar, dass mehrere Rechenaufgaben bearbeitet werden müssen, um einen Sensordatensatz auszuwerten, wobei eine Rechenaufgabe von der dem Sensor zugeordneten Rechenvorrichtung ausgeführt wird und die anderen Rechenaufgaben an andere Rechenvorrichtungen verteilt werden.

In einer Ausführungsform des Verfahrens erfolgt die Verteilung der Rechenaufgaben von einem zentralen Steuergerät aus. Das zentrale Steuergerät ist je nach Ausführungsvariante entweder das einzige Steuergerät im Umfelderfassungssystem oder eines der vorhandenen Steuergeräte wird als zentrales Steuergerät ausgewählt. Dabei ist es in einer Variante denkbar, dass alle Rechenvorrichtungen des Umfelderfassungssystems freie Kapazitäten oder Ressourcen an das zentrale Steuergerät melden und daraufhin das zentrale Steuergerät Rechenaufgaben an diese Rechenvorrichtungen verteilt. Es ist aber auch denkbar, dass das zentrale Steuergerät ein Protokoll über alle aktuell und in naher Zukunft durchzuführenden Rechenaufgaben führt und dieses Protokoll nutzt, um Rechenaufgaben auf nicht oder weniger stark ausgelastete Rechenvorrichtungen verteilen. In beiden Fällen hat das zentrale Steuergerät Kenntnis über die vorhandenen Ressourcen im Umfelderfassungssystem.

In einer Ausführungsform melden alle Rechenvorrichtungen des Umfelderfassungssystems freie Kapazitäten an alle anderen Rechenvorrichtungen, wobei Rechenvorrichtungen mit hoher Auslastung Rechenaufgaben an Rechenvorrichtungen mit freien Kapazitäten abgeben.

In weiteren Ausführungsformen ist es zudem denkbar, dass das zentrale Steuergerät weitere Rechenaufgaben, die nicht zur Auswertung von Sensordaten dienen, an die Rechenvorrichtungen der Sensoren verteilt, sofern freie Ressourcen vorliegen. Dies ist insbesondere dann möglich, wenn es sich bei diesen zusätzlichen Rechenaufgaben um nicht-zeitkritische Rechenaufgaben handelt, die mit niedriger Priorität durchgeführt werden können.

In einer Ausführungsform des Verfahrens sind die mindestens zwei Sensoren und das mindestens eine Steuergerät über ein Netzwerk oder einen Sensorbus miteinander verbunden. Dabei ist das Verfahren unabhängig von der verwendeten Verbindungstopologie, d.h. das Verfahren kann unabhängig davon ausgeführt werden, ob die Verbindung beispielsweise sternförmig von einem zentralen Steuergerät ausgehend aufgebaut ist oder ob die Verbindungstopologie kettenförmig ausgeführt ist, wobei jeweils eine Komponente des Umfelderfassungssystems mit der nächsten verbunden ist.

So ist es insbesondere möglich, die Verbindung als Bus auszuführen, beispielsweise als Sensorbus auszuführen, und dazu einen CAN-Bus (Controller Area Network) zu verwenden. Auch alle anderen bekannten Bus-Standards wie z.B. MOST (Media Oriented Systems Transport), LIN (Local Interconnect Network), PSI (Peripheral Sensor Interface) und deren Abwandlungen sowie direkte Kommunikationsverbindungen der Sensoren mit den zugeordneten Steuergeräten sind prinzipiell geeignet, sofern sie bidirektionalen Datenverkehr mit den für die Rechenaufgabe erforderlichen Datenraten und Latenzzeiten erlauben.

Ein weiterer Aspekt der Erfindung betrifft ein Umfelderfassungssystem mit mindestens zwei Sensoren und mindestens einem Steuergerät, wobei das Umfelderfassungssystem eingerichtet ist, das hierin beschriebene Verfahren auszuführen. Im Rahmen des Verfahrens beschriebene Merkmale gelten entsprechend für das Umfelderfassungssystem und umgekehrt.

Erfindungsgemäß wird weiterhin ein Computerprogramm vorgeschlagen, gemäß dem eines der hierin beschriebenen Verfahren durchgeführt wird, wenn das Computerprogramm auf einer programmierbaren Computereinrichtung ausgeführt wird. Je nach Ausführungsvariante sind dabei unter anderen die Rechenvorrichtungen als programmierbare Computereinrichtung ausgeführt. Das Computerprogramm kann auf einem maschinenlesbaren Speichermedium gespeichert werden, etwa auf einem permanenten oder wiederbeschreibbaren Speichermedium oder in Zuordnung zu einer Computereinrichtung oder auf einer entfernbaren CD-Rom, DVD oder einem USB-Stick. Zusätzlich oder alternativ kann das Computerprogramm auf einer Computereinrichtung, wie etwa auf einem Server zum Herunterladen bereitgestellt werden, zum Beispiel über ein Datennetzwerk wie das Internet oder einer Kommunikationsverbindung wie etwa eine Telefonleitung oder eine drahtlose Verbindung.

Ein weiterer Aspekt der Erfindung betrifft ein Fahrzeug, welches mit einem hierin beschriebenen Umfelderfassungssystem ausgestattet ist.

### Vorteile der Erfindung

Bei Umfelderfassungssystemen mit mindestens zwei Sensoren treten häufig Situationen auf, bei denen nicht alle Sensoren Sensordaten erfassen und auswerten müssen. Dies führt dazu, dass auf der einen Seite das Umfelderfassungssystem Rechenvorrichtungen aufweist, die gerade keine Rechenaufgaben bearbeiten, während auf der anderen Seite die Rechenvorrichtungen der Sensoren, die gerade Sensordaten erfassen, mit teilweise sehr komplexen Rechenaufgaben belastet sind. Im Stand der Technik war es üblich, die Leistung der Rechenvorrichtungen so zu dimensionieren, dass diese die komplexeste auftretende Rechenaufgabe noch bewältigen können. Dies hat jedoch zum einen den Nachteil, dass dadurch die Rechenvorrichtungen aufwendiger und teurer werden, zum anderen hat dies den Nachteil, dass leistungsfähigere Rechenvorrichtungen auch eine höhere Stromaufnahme aufweisen und mehr Abwärme produzieren.

Mit Hilfe des erfindungsgemäßen Verfahrens werden anfallende Rechenaufgaben auf alle in einem Umfelderfassungssystem verfügbaren Rechenvorrichtungen aufgeteilt. Aufwendige Berechnungen zur Auswertung von Sensordaten werden dazu gegebenenfalls in mehrere Rechenaufgaben zerlegt. Da in der Regel nicht sämtliche Sensoren gleichzeitig aktiv sind und Sensordaten erfassen, stehen in der Regel immer mehrere Rechenvorrichtungen zur Verfügung, um Sensordaten eines Sensors auszuwerten. Da dank des erfindungsgemäßen Verfahrens die Rechenvorrichtungen gleichmäßig ausgelastet werden, kann jede einzelne Rechenvorrichtung kleiner und weniger leistungsfähig ausgelegt werden. Dadurch sinkt die Stromaufnahme der Rechenvorrichtungen und auch die produzierte Abwärme ist geringer. Dadurch lassen sich die Sensoren kostengünstiger ausführen, da zum einen eine preiswertere Rechenvorrichtung genügt, und zum anderen eine einfachere Stromversorgung und einfachere Behandlung der Abwärme ausreichend sind. Dennoch steht genügend Rechenleistung im Umfelderfassungssystem zur Verfügung.

Des Weiteren kann auch das mindestens eine Steuergerät seine Rechenvorrichtung für die Bearbeitung von Rechenaufgaben zur Verfügung stellen, insbesondere für die Fälle, wo eine Vielzahl oder alle Sensoren des Umfelderfassungssystems aktiv sind.

In weiteren Ausführungsvarianten ist es zudem vorgesehen, dass durch das Steuergerät auch andere Rechenaufgaben, die nicht zur Auswertung der Sensordaten dienen, auf die einzelnen Rechenvorrichtungen verteilt werden können. Auch dies sorgt dafür, dass die im Umfelderfassungssystem vorhandenen Rechenvorrichtungen besser ausgenutzt werden. Ebenfalls möglich ist die Einbindung weiterer Sensoren und Steuergeräte, die nicht notwendigerweise der Umfelderfassung dienen müssen, in das Netzwerk, um die Rechenaufgaben auf eine möglichst große Anzahl von Rechenvorrichtungen zu verteilen.

Vorteilhafter Weise lässt sich das Verfahren unabhängig von der Verbindungstopologie zwischen den Sensoren und den Steuergeräten vornehmen, so dass es sich insbesondere in vorhandene CAN-Busse oder Sensorbusse eines Fahrzeugs integrieren lässt.

### Kurze Beschreibung der Zeichnungen

Ausführungsbeispiele der Erfindung sind in den Zeichnungen dargestellt und in der nachfolgenden Beschreibung näher erläutert. Es zeigen:
- Figur 1: eine schematische Darstellung eines Umfelderfassungssystems mit einem Steuergerät und drei Sensoren und
- Figur 2: ein Fahrzeug mit einem erfindungsgemäßen Umfelderfassungssystem.

In der nachfolgenden Beschreibung der Ausführungsbeispiele der Erfindung werden gleiche oder ähnliche Komponenten und Elemente mit gleichen Bezugszeichen bezeichnet, wobei auf eine wiederholte Beschreibung dieser Komponenten oder Elemente in Einzelfällen verzichtet wird. Die Figuren stellen den Gegenstand der Erfindung nur schematisch dar.

### Ausführungsformen der Erfindung

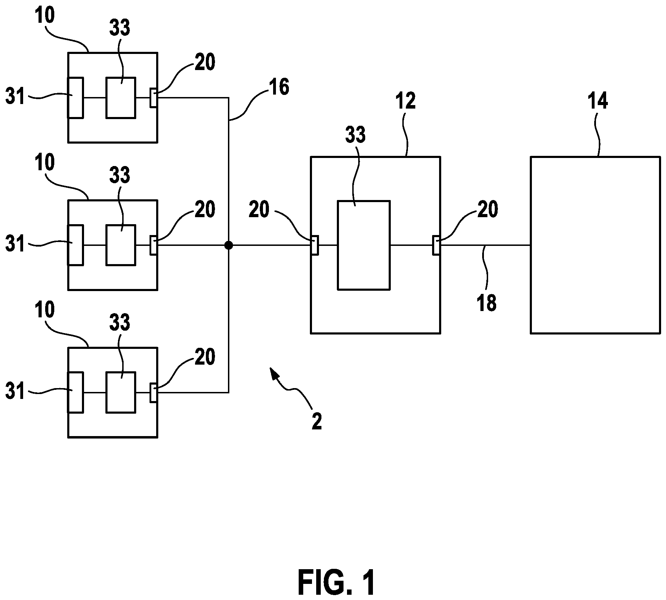

In Figur 1 ist ein Umfelderfassungssystem 2 schematisch dargestellt.

Das Umfelderfassungssystem 2 weist in dem in Figur 1 dargestellten Beispiel drei Sensoren 10 und ein Steuergerät 12 auf. Die Sensoren 10 sind jeweils eingerichtet, Informationen über das Umfeld eines Fahrzeugs zu sammeln und an das Steuergerät 12 zu übermitteln. Das Steuergerät 12 empfängt die von den Sensoren 10 gewonnenen Informationen über das Umfeld und erstellt daraus ein Abbild des Umfelds des Fahrzeugs. Diese Informationen können dann weiteren Systemen 14 des Fahrzeugs zugänglich gemacht werden. Diese weiteren Systeme 14 umfassen beispielsweise Fahrassistenzsysteme.

Die Sensoren 10 umfassen jeweils eine Messeinheit 31, die eingerichtet ist, Sensordaten zu erfassen. Die Messeinheit 31 steht mit einer Rechenvorrichtung 33 in Verbindung. Die Rechenvorrichtung 33 überwacht den Messvorgang mit der Messeinheit 31. Die Rechenvorrichtung 33 steht mit Hilfe eines Transceivers 20 mit einem Sensorbus 16 in Verbindung. Der Sensorbus 16 ist beispielsweise als CAN-Bus ausgeführt und verbindet sämtliche Sensoren 10 und Steuergeräte 12 des Umfelderfassungssystems 2 miteinander. In weiteren (nicht dargestellten) Ausführungsformen der Erfindung sind auch andere Möglichkeiten denkbar, um die Sensoren 10 und die Steuergeräte 12 miteinander zu verbinden. Beispielsweise wäre auch ein sternförmiges Netzwerk denkbar, bei dem jeder Sensor 10 über ein eigenes Kabel mit einem zentralen Steuergerät 12 verbunden wird. Des Weiteren wäre es auch denkbar, die Verbindung drahtlos, beispielsweise in Form von Bluetooth oder WLAN auszuführen.

Das Steuergerät 12 umfasst in der dargestellten Ausführungsvariante zwei Transceiver 20 und ebenfalls eine Rechenvorrichtung 33. Über einen der Transceiver 20 steht das Steuergerät 12 mit dem Sensorbus 16 in Verbindung. Über einen weiteren der Transceiver 20 steht das Steuergerät 12 mit einem weiteren Bus 18 in Verbindung, der das Steuergerät 12 mit den weiteren Systemen 14 des Fahrzeugs verbindet.

Betreffend die Auslastung der Rechenvorrichtungen 33 im Umfelderfassungssystem 2 sind im Wesentlichen drei verschiedene Szenarien denkbar.

Im ersten Fall werden sämtliche Sensoren 10 verwendet, um Informationen über das Umfeld eines Fahrzeugs zu gewinnen. Dabei erfassen sämtliche Messeinheiten 31 Sensordaten, die ausgewertet werden müssen. Zur Durchführung der Auswertung werden Rechenaufgaben erstellt. Diese Rechenaufgaben umfassen im einfachsten Fall lediglich einen Sensordatensatz einer Messeinheit 31, genauer gesagt die Auswertung des Sensordatensatzes. In weiteren Ausführungsformen sind aber auch beliebige Zusammenstellungen einer Rechenaufgabe aus kompiliertem Programmcode, umkompiliertem Programmcode, Bytecode, Sensordaten, Parameter, Befehlskommandos oder Kombination mindestens zweier dieser Möglichkeiten denkbar. So ist es beispielsweise möglich, eine Rechenaufgabe aus einer Kombination von einem Sensordatensatz, einer Messeinheit 31 und kompiliertem Programmcode zu bilden, wobei der Programmcode eingerichtet ist, den Sensordatensatz auszuwerten.

Die erstellten Rechenaufgaben werden nun auf die in dem Umfelderfassungssystem 2 vorhandenen Rechenvorrichtungen 33 aufgeteilt. Dazu ist es in einer Ausführungsvariante vorgesehen, dass das Steuergerät 12 als zentrales Steuergerät ausgeführt wird und die Verteilung der Rechenaufgaben auf die Rechenvorrichtungen 33 vornimmt. In einer weiteren Ausführungsform melden die Sensoren 10 und die Steuergeräte 12 über den Sensorbus 16 freie Ressourcen ihrer Rechenvorrichtung 33, die dann von anderen Sensoren 10 bzw. anderen Steuergeräten 12 in Anspruch genommen werden können.

Da im ersten Fall jeder der Sensoren 10 mit der Messeinheit 31 Sensordaten aufnimmt und diese auswerten muss, wird zunächst von einem Sensor 10 die eigene Rechenvorrichtung 33 mit einer Rechenaufgabe beaufschlagt. Dabei ist es zusätzlich gegebenenfalls möglich, einige Rechenaufgaben auf die Rechenvorrichtung 33 des Steuergeräts 12 auszulagern. Dies ist insbesondere dann sinnvoll, wenn die Auswertung eines Sensordatensatzes in mehrere Rechenaufgaben aufgeteilt wird.

Im zweiten Fall werden nicht sämtliche Sensoren 10 des Umfelderfassungssystems 2 verwendet. Beispielsweise wird von den drei Sensoren 10 nur ein einziger Sensor 10 zur Umfelderfassung eingesetzt. In diesem Fall sind die beiden weiteren Sensoren 10 untätig, und deren Rechenvorrichtungen 33 weisen freie Ressourcen auf, was über den Sensorbus 16 an die angeschlossenen Busteilnehmer übermittelt wird. In diesem Fall kann der einzige Sensor 10, der zur Umfelderfassung verwendet wird, einige Rechenaufgaben über den Sensorbus 16 an Rechenvorrichtungen 33 der anderen Sensoren 10 oder an die Rechenvorrichtung 33 des Steuergeräts 12 auslagern.

Im dritten Fall wird gerade kein Sensor 10 zur Umfelderfassung eingesetzt. In diesem Fall ist es denkbar, dass das Steuergerät 12 Rechenaufgaben, die nicht unmittelbar mit der Umfelderfassung zu tun haben, über den Sensorbus 16 an die Rechenvorrichtungen 33 der Sensoren 10 verteilt.

In weiteren Ausführungsvarianten ist es denkbar, dass das Steuergerät 12 als ein zentrales Steuergerät ausgeführt wird. Dabei kann vorgesehen sein, dass das zentrale Steuergerät ein Protokoll über die zur Verfügung stehenden Ressourcen der Rechenvorrichtungen 33 führt. Dieses Protokoll wird dann vom zentralen Steuergerät genutzt, um Rechenaufgaben auf die vorhandenen Rechenvorrichtungen 33 so aufzuteilen, dass diese möglichst gleichmäßig ausgelastet werden.

Des Weiteren ist es denkbar, auch in dem Fall, dass nicht sämtliche Sensoren 10 zur Umfelderfassung eingesetzt werden, Rechenaufgaben, die nicht unmittelbar mit der Umfelderfassung zu tun haben, auf freie Rechenvorrichtungen 33 aufzuteilen.

Allen Ausführungsvarianten und Fällen gemeinsam ist, dass die Rechenvorrichtungen 33 gleichmäßig mit Rechenaufgaben beaufschlagt werden können. Dabei werden zum einen Lastspitzen vermieden, in denen Rechenaufgaben zur Auswertung von Sensordaten eines Sensors 10 nicht nur von der dem jeweiligen Sensor 10 zugeordneten Rechenvorrichtung 33 ausgeführt werden, sondern teilweise auch von anderen Rechenvorrichtungen 33 ausgeführt werden. Zum anderen werden Leerlaufzeiten genutzt, um andere Rechenaufgaben auszuführen. Da die Rechenaufgaben beispielsweise in Form von kompilierten, unkompilierten Programmcode, Bytecode oder dergleichen definiert sein können, sind dabei die Rechenvorrichtung 33 nicht auf bestimmte Typen von Rechenaufgaben beschränkt, sondern können universell eingesetzt werden.

Eine solche Aufteilung der Ressourcen von Rechenvorrichtungen 33 ist sinnvoll, da in den Umfelderfassungssystemen 2 oftmals nicht sämtliche Sensoren 10 gleichzeitig zur Erfassung des Umfelds verwendet werden.

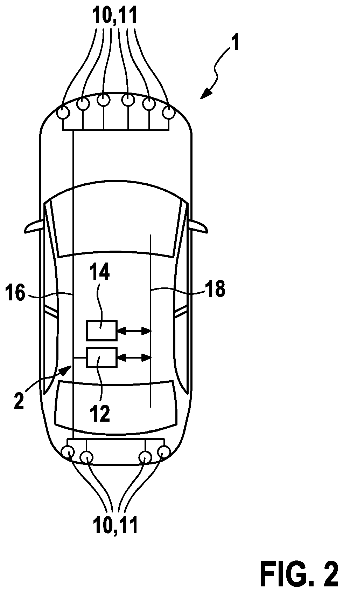

Figur 2 zeigt ein Fahrzeug 1 mit dem erfindungsgemäßen Umfelderfassungssystem 2.

Figur 2 zeigt ein Ausführungsbeispiel, bei dem das Umfelderfassungssystem 2 mit insgesamt zehn Sensoren 10 ausgestattet ist. Die Sensoren 10 sind in diesem Beispiel als Ultraschallsensoren 11 ausgeführt. Mit den Ultraschallsensoren 11 kann ein Abstand zwischen dem Fahrzeug 1 und einem Objekt bestimmt werden. Um Objekte zu erfassen, die vor dem Fahrzeug 1 liegen, sind im vorderen Bereich des Fahrzeugs 1 sechs Ultraschallsensoren 11 angeordnet. Entsprechend sind im hinteren Bereich des Fahrzeugs 1 vier Ultraschallsensoren 11 angeordnet, um Objekte zu erfassen, die hinter dem Fahrzeug 1 liegen. Die Sensoren 10 sind, wie bereits in Bezug zu Figur 1 beschrieben, über den Sensorbus 16 untereinander und mit dem Steuergerät 12 verbunden. Das Steuergerät 12 steht darüber hinaus mit dem weiteren Bus 18 in Verbindung, der das Steuergerät 12 mit den weiteren Systemen 14 des Fahrzeugs 1 verbindet.

Je nach Fahrsituation werden nicht sämtliche Sensoren 10 zur Erfassung des Umfelds des Fahrzeugs 1 benötigt. Handelt es sich bei dem weiteren System 14 beispielsweise um einen Rückwärtsfahrassistenten, werden nur die vier im hinteren Bereich des Fahrzeugs 1 angeordneten Ultraschallsensoren 11 verwendet. In diesem Fall können die Rechenvorrichtungen 33 der sechs im vorderen Bereich des Fahrzeugs 1 angeordneten Ultraschallsensoren 11 verwendet werden, um Rechenaufgaben zur Auswertung von Sensordaten der vier im hinteren Bereich des Fahrzeugs 1 angeordneten Ultraschallsensoren 11 durchzuführen. Mit dem erfindungsgemäßen Verfahren wird somit vermieden, dass die Rechenvorrichtungen 33 der sechs im vorderen Bereich des Fahrzeugs 1 angeordneten Ultraschallsensoren 11 brachliegen.

Die Erfindung ist nicht auf die hier beschriebenen Ausführungsbeispiele und die darin hervorgehobenen Aspekte beschränkt. Vielmehr sind innerhalb des durch die Ansprüche angegebenen Bereichs eine Vielzahl von Abwandlungen möglich, die im Rahmen fachmännischen Handelns liegen.

## Patentansprüche

1. Verfahren zum Betrieb eines Umfelderfassungssystems (2) für ein Fahrzeug (1), wobei das Umfelderfassungssystem (2) mindestens ein Steuergerät (12) und mindestens zwei Sensoren (10) umfasst und die Sensoren (10) eingerichtet sind, Sensordaten zu erfassen, auszuwerten und die Ergebnisse an das Steuergerät (12) zu senden, wobei jeder Sensor (10) sowie das Steuergerät (12) jeweils eine Rechenvorrichtung (33) zur Bearbeitung von Rechenaufgaben umfassen, wobei Rechenaufgaben zuerst auf Rechenvorrichtungen (33) von Sensoren (10) verteilt werden, die freie Ressourcen aufweisen, und anschließend die noch nicht verteilten Rechenaufgaben an das Steuergerät (12) verteilt werden, **dadurch gekennzeichnet, dass** auf freie Ressourcen einer Rechenvorrichtung (33) geschlossen wird, wenn der Sensor (10), dem die Rechenvorrichtung (33) zugeordnet ist, momentan keine Sensordaten erfasst.

2. Verfahren nach Anspruch 1, **dadurch gekennzeichnet, dass** die Rechenaufgaben der Auswertung von Sensordaten dienen.

3. Verfahren nach einem der Ansprüche 1 bis 2, **dadurch gekennzeichnet, dass** die Sensoren (10) als Ultraschallsensoren (11), Radarsensoren, Lidarsensoren oder als optische Kameras ausgeführt sind.

4. Verfahren nach einem der Ansprüche 1 bis 3, **dadurch gekennzeichnet, dass** die Rechenaufgaben in Form von kompiliertem Programmcode, unkompiliertem Programmcode, Bytecode, Sensordaten, Parameter, Befehlskommandos oder einer Kombination mindestens zweier dieser Möglichkeiten ausgestaltet sind.

5. Verfahren nach einem der Ansprüche 1 bis 4, **dadurch gekennzeichnet, dass** die Verteilung der Rechenaufgaben von einem zentralen Steuergerät durchgeführt wird.

6. Verfahren nach einem der Ansprüche 1 bis 5, **dadurch gekennzeichnet, dass** jeder Sensor (10) und jedes Steuergerät (12) freie Ressourcen ihrer Rechenvorrichtung (33) an die übrigen Sensoren (10) und Steuergeräte (12) melden und anschließend Sensoren (10) und/oder Steuergeräte (12), deren Rechenvorrichtung (33) ausgelastet ist, Rechenaufgaben auf Rechenvorrichtungen (33) mit freien Ressourcen verteilen.

7. Umfelderfassungssystem (2) mit mindestens zwei Sensoren (10) und mindestens einem Steuergerät (12), **dadurch gekennzeichnet, dass** das Umfelderfassungssystem (2) eingerichtet ist, das Verfahren nach einem der Ansprüche 1 bis 7 auszuführen.

8. Computerprogramm, das das Verfahren nach einem der Ansprüche 1 bis 6 ausführt, wenn es auf einem Computer abläuft.

9. Fahrzeug (1) mit einem Umfelderfassungssystem (2) nach Anspruch 7.

## Claims

1. Method for operating a surroundings sensing system (2) for a vehicle (1), the surroundings sensing system (2) comprising at least one control device (12) and at least two sensors (10), and the sensors (10) being set up to acquire and evaluate sensor data and to transmit the results to the control device (12), each sensor (10) and the control device (12) respectively comprising a computing apparatus (33) for processing computing tasks, computing tasks first of all being distributed to computing apparatuses (33) of sensors (10) which have free resources, and the computing tasks which have not yet been distributed then being distributed to the control device (12), **characterized in that** free resources of a computing apparatus (33) are inferred if the sensor (10) to which the computing apparatus (33) is assigned is currently not acquiring any sensor data.

2. Method according to Claim 1, **characterized in that** the computing tasks are used to evaluate sensor data.

3. Method according to one of Claims 1 to 2, **characterized in that** the sensors (10) are in the form of ultrasonic sensors (11), radar sensors, lidar sensors or optical cameras.

4. Method according to one of Claims 1 to 3, **characterized in that** the computing tasks are in the form of compiled program code, non-compiled program code, byte code, sensor data, parameters, instruction commands or a combination of at least two of these possibilities.

5. Method according to one of Claims 1 to 4, **characterized in that** the computing tasks are distributed by a central control device.

6. Method according to one of Claims 1 to 5, **characterized in that** each sensor (10) and each control device (12) report free resources of their computing apparatus (33) to the other sensors (10) and control devices (12), and sensors (10) and/or control devices (12) whose computing apparatus (33) is being utilized then distribute computing tasks to computing apparatuses (33) with free resources.

7. Surroundings sensing system (2) having at least two sensors (10) and at least one control device (12), **characterized in that** the surroundings sensing system (2) is set up to carry out the method according to one of Claims 1 to 7.

8. Computer program which carries out the method according to one of Claims 1 to 6 when it runs on a computer.

9. Vehicle (1) having a surroundings sensing system (2) according to Claim 7.

## Revendications

1. Procédé de mise en fonctionnement d'un système (2) de détection de l'environnement destiné à un véhicule (1), dans lequel le système de détection (2) de l'environnement comprend au moins un appareil de commande (12) et au moins deux capteurs (10) et dans lequel les capteurs (10) sont conçus pour acquérir et évaluer des données de capteurs et pour envoyer les résultats à l'appareil de commande (12), dans lequel chaque capteur (10) et l'appareil de commande (12) comprennent respectivement un dispositif de calcul (33) destiné à traiter des tâches de calcul, dans lequel les tâches de calcul sont tout d'abord distribuées entre des dispositifs de calcul (33) de capteurs (10), lesquels dispositifs de calcul comportent des ressources libres, et les tâches de calculs non encore distribuées sont ensuite distribuées à l'appareil de commande (12), **caractérisé en ce qu'**il est déterminé sur des ressources libres d'un dispositif de calcul (33) si le capteur (10) auquel est associé le dispositif de calcul (33), n'acquiert momentanément aucune donnée de capteur.

2. Procédé selon la revendication 1, **caractérisé en ce que** les tâches de calcul servent à évaluer les données de capteurs.

3. Procédé selon l'une quelconque des revendications 1 à 2, **caractérisé en ce que** les capteurs (10) sont réalisés sous la forme de capteurs à ultrasons (11), de capteurs radars, de capteurs lidars ou de caméras optiques.

4. Procédé selon l'une quelconque des revendications 1 à 3, **caractérisé en ce que** les tâches de calcul sont réalisées sous la forme d'un code de programme compilé, d'un code de programme non compilé, d'un code d'octets, de données de capteurs, de paramètres, d'ordres de commande ou d'une combinaison d'au moins deux desdites possibilités.

5. Procédé selon l'une quelconque des revendications 1 à 4, **caractérisé en ce que** la distribution des tâches de calcul est effectuée par un appareil de commande central.

6. Procédé selon l'une quelconque des revendications 1 à 5, **caractérisé en ce que** chaque capteur (10) et chaque appareil de commande (12) envoient des ressources libres de leur dispositif de calcul (33) aux capteurs (10) et aux appareils de commande (12) restants puis les capteurs (10) et/ou les appareils de commande (12), dont le dispositif de calcul (33) est occupé, distribuent des tâches de calcul à des dispositifs de calcul (33) ayant des ressources libres.

7. Système de détection (2) de l'environnement comportant au moins deux capteurs (10) et au moins un appareil de commande (12), **caractérisé en ce que** le système de détection (2) de l'environnement est conçu pour mettre en oeuvre un procédé selon l'une quelconque des revendications 1 à 7.

8. Programme d'ordinateur mettant en oeuvre le procédé selon l'une quelconque des revendications 1 à 6 lorsqu'il est exécuté sur un ordinateur.

9. Véhicule (1) comportant un système de détection (2) de l'environnement selon la revendication 7.
